# EUROPEAN PATENT SPECIFICATION

(11) **EP 4 156 624 B1**
(45) Date of publication and mention of the grant of the patent: **16.04.2025**
(21) Application number: 21809048.8
(22) Date of filing: 05.03.2021
(51) Int. Cl.: H04L 65/1073, H04L 67/51, G06F 16/215

(54) **SUBSCRIPTION RECORD MANAGEMENT METHOD AND SYSTEM, SUBSCRIPTION RECORD IDENTIFICATION METHOD, NETWORK DEVICE, AND STORAGE MEDIUM**
VERFAHREN UND SYSTEM ZUR VERWALTUNG VON ABONNEMENTAUFZEICHNUNGEN, VERFAHREN ZUR IDENTIFIZIERUNG VON ABONNEMENTAUFZEICHNUNGEN, NETZWERKVORRICHTUNG UND SPEICHERMEDIUM
PROCÉDÉ ET SYSTÈME DE GESTION D'ENREGISTREMENT D'ABONNEMENT, PROCÉDÉ D'IDENTIFICATION D'ENREGISTREMENT D'ABONNEMENT, DISPOSITIF DE RÉSEAU ET SUPPORT DE STOCKAGE

(30) Priority: 21.05.2020 CN 202010434741
(43) Date of publication of application: 29.03.2023
(73) Proprietor: ZTE Corporation, Shenzhen, Guangdong 518057 (CN)
(72) Inventor: YANG, Xiaoli, Shenzhen, Guangdong 518057 (CN)
(74) Representative: Aipex B.V.
(86) International application number: PCT/CN2021/079213
(87) International publication number: WO 2021/232886

(56) References cited:
- WO-A1-2019/192593
- CN-A- 110 351 111
- CN-A- 110 519 746
- CN-A- 110 968 744
- US-A1- 2018 018 380
- "3rd Generation Partnership Project; Technical Specification Group Services and System Aspects; Service requirements for the User Data Convergence (UDC) (Release 11)", 3GPP STANDARD ; TECHNICAL REPORT ; 3GPP TR 22.985, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V11.0.0, 21 September 2012 (2012-09-21), pages 1 - 16, XP051292618
- NOKIA, NOKIA SHANGHAI BELL: "NEF service operation correction", 3GPP DRAFT; S2-188722 (WAS 7929 NEF SERVICE OPERATION CORRECTION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia Antipolis, France; 20180820 - 20180824, 26 August 2018 (2018-08-26), Mobile Competence Centre ; 650, route des Lucioles ; F-06921 Sophia-Antipolis Cedex ; France , XP051537544

## Description

### TECHNICAL FIELD

The present application relates to the field of communications, and for example, to a subscription record management method and system, a subscription record identification method, a network device, and a storage medium.

### BACKGROUND

Typically, a network function (NF) such as an access and mobility management function (AMF), a session management function (SMF), or a short message service function (SMSF) will also initiate a data subscription operation towards unified data management (UDM) while initiating a registration message, and a corresponding subscription record will be stored at a UDM side. As required, when the NF such as the AMF, the SMF, and the SMSF also initiate an unsubscription towards the UDM while initiating a de-registration message, to notify the UDM to delete the corresponding subscription record. However, in some abnormal scenarios, such as handling abnormality of the NF such as the AMF, the SMF, and the SMSF, an unsubscription process is not initiated simultaneously with a de-registration process, or an unsubscription message of the NF is lost due to the network abnormality, which may cause some invalid subscription records, i.e., redundant subscription records, to be left in the UDM. But a total number of subscription records for a user at the UDM side is capped, and if the number of subscription records for that user reaches a system threshold at the UDM side, then a normal data subscription operation for that user by the NF will be affected later. US2018018380A1 introduces about a method of maintaining consistent subscriber data on geo-redundant subscriber databases. A technical literature "3rd Generation Partnership Project; Technical Specification Group Services and System Aspects; Service requirements for the User Data Convergence (UDC)(Release 11)", 3GPP STANDARD; TECHNICAL REPORT; 3GPP TR 22.985, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG1, no. V11.0.0, 21 September 2012 (2012-09-21), pages 1-16, XP051292618 introduces about the service requirements for the user data convergence.

### SUMMARY

The present application provides a subscription record management method and system, a subscription record identification method, a network device, and a storage medium. The invention is set out in the appended set of claims.

### BRIEF DESCRIPTION OF DRAWINGS

FIG. 1 is an interaction flowchart of a subscription record management method provided in an embodiment one of the present application;
FIG. 2 is a flowchart of a subscription initiation NF determining a target subscription record provided in an embodiment one of the present application;
FIG. 3 is an interaction flowchart of a subscription record management method provided in an embodiment two of the present application;
FIG. 4 is an interaction flowchart of a subscription record management method provided in an embodiment three of the present application;
FIG. 5 is a flowchart of a UDM being performed a preliminary screening provided in an embodiment four of the present application;
Fig. 6 is a flowchart of performing a redundant identification by cooperating a UDM with a subscription initiation NF provided in an embodiment four of the present application;
FIG. 7 is a schematic diagram of a hardware structure of a network device provided in an embodiment five of the present application; and
FIG. 8 is a schematic diagram of a subscription record management system provided in an embodiment five of the present application.

### DETAILED DESCRIPTION

Embodiments of the present application will now be described by way of the Detailed Description in conjunction with the drawings below.

### Embodiment one

Since the presence of a redundant subscription record may take up an indicator that a user subscribes to a record at a UDM side, it may happen that a total number of subscription records may be out of limit and a normal data subscription may not be initiated successfully in a case where the number of current actual valid subscription records of the user are not big. To avoid the occurrence of such problems, the following two mechanisms to solve the problems are provided in the related art.

### Mechanism one:

An expire date is set in a subscription request: when an NF such as an AMF, an SMF, an SMSF initiates the subscription request, and an expire date of the subscription is synchronously set. In this way, the UDM may delete itself when a subscription record expires but is not deleted. However, during an actual operation, the NF may set a permanent/long-term effective expire date to simplify its implementation, whereby the mechanism is enabled.

### Mechanism two:

An implicitUnsubscribe label is carried in a subscription request, the implicitUnsubscribe label may identify that the subscription request will fail with de-registration of the NF. When the NF carries the implicitUnsubscribe label while initiating the subscription request, and when the NF is de-registered, an unsubscription request is not specially sent to a UDM. When the UDM sorts subscription records, if the subscription records are found to carry the implicitUnsubscribe label and the NF corresponding to this subscription record is de-registered, then the UDM may directly clean up the subscription record. However, during an actual operation, it cannot be ensured that all subscription initiation NFs carry the implicitUnsubscribe label in the subscription request. The mechanism two also fails for a subscription record that does not carry the implicitUnsubscribe label.

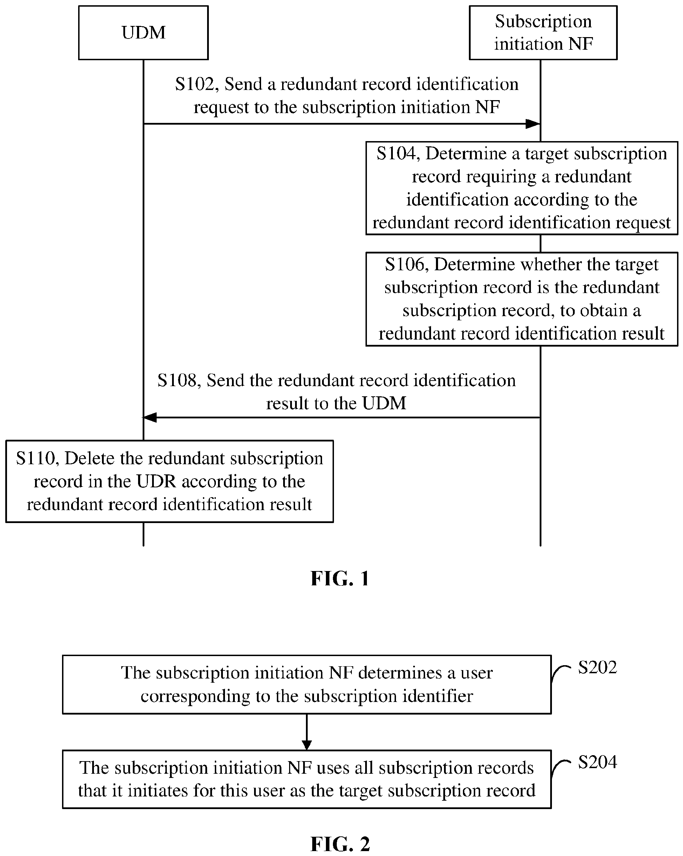

Therefore, there is a need for a subscription record management method to identify and clean redundant subscription records of the user at the UDM side, so that it is avoided that a total number of subscription records of the user at the UDM side reaches a system threshold due to the impact of a large number of redundant subscription records, and thus a normal data subscription operation of the NF is affected. The redundant subscription record management method needs to be implemented through the cooperation of the UDM and the subscription initiation NF, that is, the UDM achieves the subscription record management method and the subscription initiation NF achieves the subscription record identification method. The subscription record management method provided in this embodiment is described below in connection with FIG. 1.

In S102, the UDM sends a redundant record identification request to the subscription initiation NF. The so-called "subscription initiation NF" is for the subscription records, a subscription record is initiated by an NF, then this NF is the subscription initiation NF of the subscription record. The purpose of the subscription initiation NF initiating the subscription request to the UDM is to know a data change situation of a target user in time. Once the subscription request is accepted by the UDM, a corresponding subscription record is generated in the UDR. For example, if a subscription record is initiated by the AMF towards the UDM, then the AMF is the subscription initiation NF of the subscription record, and when the data of the target user is changed, the UDM notifies the AMF according to the subscription record. The subscription initiation NF may be the SMF, the SMSF, or any other NFs that need to initiate a data subscription request to the UDM, in addition to the AMF.

The redundant record identification request is configured for requesting the subscription initiation NF to identify whether the target subscription record is the redundant subscription record, the so-called redundant subscription record is actually an invalid subscription record. When the UDM needs to determine whether the target subscription record has already been the redundant subscription record, the UDM may "query" the subscription initiation NF for that subscription record, and the subscription initiation NF determines whether that subscription record is already invalid.

In S104, the subscription initiation NF determines a target subscription record requiring a redundant identification according to the redundant record identification request.

The redundant record identification request serves to request the subscription initiation NF to identify whether the target subscription record is the redundant subscription record. Thus, after the redundant record identification request is received, the subscription initiation NF needs to firstly determine which target subscription records are to be identified by itself.

In some examples of this embodiment, the UDM may carry record indication information in the redundant record identification request, in this way, the subscription initiation NF may extract the record indication information from the redundant record identification request and then determine which subscription records the target subscription records are to be based on the record indication information. The UDM may indicate one or several subscription records as the target subscription record to the subscription initiation NF, for example, the record indication information carried in the redundant record identification request by the UDM is a subscription identifier (ID) of the subscription record, where the so-called subscription identifier is information that may uniquely distinguish one subscription record at the UDM side, and the subscription identifier of each subscription record at the UDM side is unique. In other cases, the UDM may also initiate a subscription record of a general type to the subscription initiation NF as the target subscription record by using some information. For example, in an example of this embodiment, the record indication information carried in the redundant record identification request by the UDM is the user identifier, and when the user identifier is configured as the record indication information, the UDM indicates the subscription initiation NF to use all subscription records of a user corresponding to the user identifier initiated by the subscription initiation NF as the target subscription record.

The record indication information includes, but not limited to, the subscription identifier and user identifier described above. For example, in some examples of this embodiment, the record indication information may also be time indication information, the UDM indicates a period of time by carrying the time indication information in the redundant record identification request. In this case, the subscription initiation NF may use all subscription records initiated by the subscription initiation NF within that period of time as the target subscription record. Each of the above record indication information may be used individually, it is also possible to use two or more in combination. For example, in one example, where the record indication information that the UDM provides to the subscription initiation NF through the redundant record identification request includes both the user identifier and the time indication information, the subscription initiation NF may take both subscription records initiated by the subscription initiation NF for a corresponding user within the corresponding time period as the target subscription record.

In an example of this embodiment, one or more subscription identifiers are carried in the redundant record identification request received by the subscription initiation NF, and the subscription initiation NF determines the target subscription record according to the flow shown in FIG. 2:
In S202, the subscription initiation NF determines a user corresponding to the subscription identifier.

The subscription initiation NF extracts the record indication information from the redundant record identification request and determines a corresponding subscription record according to the subscription identifier in the record indication information. After the corresponding subscription record is determined, the subscription initiation NF may also determine a user to which the subscription record belongs, and this user is the user corresponding to the subscription identifier. In S204, the subscription initiation NF uses all subscription records initiating for this user as the target subscription record.

After the user corresponding to the subscription identifier is determined, the subscription initiation NF may take all subscription records itself initiated for that user as the target subscription record, that is, all subscription records belonging to that user that are self-initiated are configured as the target subscription record.

In the above examples, the subscription initiation NF may determine the target subscription record purely according to the record indication information in the redundant record identification request or may determine the target subscription record on the basis of the record indication information in combination with some preset rules, and these preset rules should be pre-agreed by the subscription initiation NF with the UDM. In other examples of this embodiment, the subscription initiation NF may also determine the target subscription record simply relying on its own pre-agreed rules with the UDM, in this case, the UDM does not need to carry the record indication information in the redundant record identification request. For example, in one example of this embodiment, the subscription initiation NF pre-agrees with the UDM that upon receiving the redundant record identification request, the subscription initiation NF performs the redundant identification for all subscription records initiated by itself, i.e., all subscription records initiated by the NF are configured as the target identification record. In another example, the subscription initiation NF pre-agrees with the UDM that upon receiving the redundant record identification request, the subscription initiation NF redundantly identifies all subscription records that it initiated by 10 days ago as the target subscription record.

In S106, the subscription initiation NF determines whether the target subscription record is the redundant subscription record, to obtain a redundant record identification result.

After the subscription initiation NF determines the target subscription record, the subscription initiation NF may determine a valid subscription record of the target subscription record based on its own current data subscription needs, the remaining of the target subscription record, except for the valid subscription record, is the redundant subscription record. In some other examples of this embodiment, the subscription initiation NF may also identify the target subscription record in other manners, for example, the subscription initiation NF produces a corresponding request record at a local end when the subscription initiation NF initiates the subscription request. When the subscription initiation NF initiates a corresponding de-registration request, the request record maintained at the local end is marked, the invalid request record is marked out, in this way, when the subscription initiation NF receives the redundant record identification request from the UDM, the redundant subscription record may be determined directly from the request record maintained at the local end.

In S108, the subscription initiation NF sends the redundant record identification result to the UDM. After the subscription initiation NF identifies the redundant subscription record in the target subscription record, the subscription initiation NF obtains the redundant record identification result. After the redundant record identification result is obtained, the subscription initiation NF sends the redundant record identification result to the UDM.

In S110, the UDM deletes the redundant subscription record in the UDR according to the redundant record identification result.

After the UDM receives the redundant record identification result, the redundant subscription record may be determined according to the redundant record identification result, and then, the UDM deletes the redundant subscription record from the UDR.

The subscription identifier of the redundant subscription record may be included among the redundant record identification results, and the subscription identifier is used to indicate to the UDM which of the redundant subscription records are. In this way, the UDM may directly determine which of the subscription records to be deleted after receiving the redundant record identification result. Alternatively, in another example of this embodiment, the subscription identifier of the valid subscription record may also be carried in the redundant record identification result to indicate to the UDM which of the target subscription records are the valid subscription record, and the UDM may also determine the redundant subscription records to be deleted according to the subscription identifier of the valid subscription record.

The two different redundant record identification results described above actually correspond to two different manners in which the subscription initiation NF indicates the redundant subscription record to the UDM, in the former manner, after the UDM receives the redundant record identification result, the deleted object may be determined directly without determining which target subscription records are at all, but in the latter manner, the UDM is required to determine the target subscription record firstly, if the UDM is unable to determine the target subscription record, the UDM is unable to screen out the redundant subscription record by excluding the valid subscription record of the target subscription record. Therefore, the former manner is advantageous in reducing the operational burden of the UDM.

According to the subscription record management method provided in the embodiments of the present application, redundant subscription records in the target subscription record may be screened out by the subscription initiation NF through cooperation of the UDM and the subscription initiation NF, and then the screened redundant subscription records are deleted by the UDM, so that redundant subscription records of the user are prevented from being overstocked at the UDM side, the NF initiating a normal data subscription process for the user is influenced, and thus the fluency of the data subscription process is ensured.

### Embodiment two

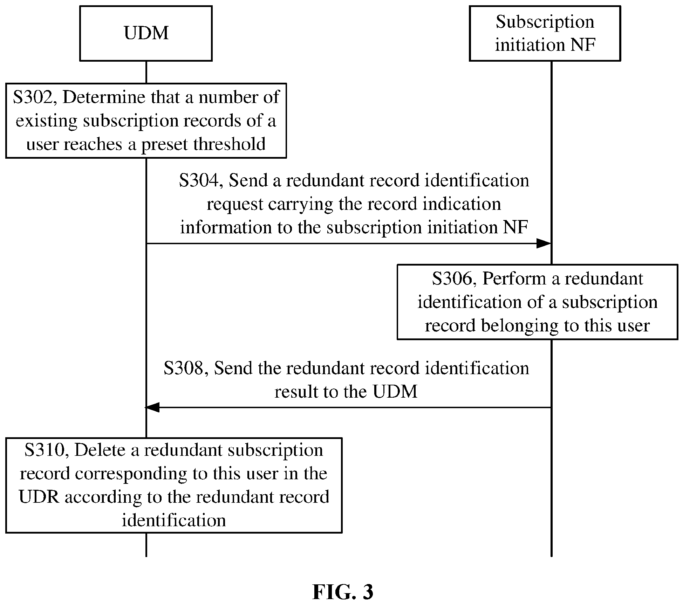

This embodiment will continue to describe the aforementioned subscription record management method based on the embodiment one, as shown in FIG. 3.

In S302, the UDM determines that a number of existing subscription records of a user reaches a preset threshold.

In some examples of this embodiment, the UDM may periodically count a total number of existing subscription records of each user in the UDR, for example, the UDM counts a total number of subscription records of each user for a period of 24 hours, if it is found that a total number of current subscription records of a user in the UDR is large, and a normal operation of the NF to initiate a data subscription for the user may be affected in the near future, then the UDM may determine that the subscription record corresponding to this user needs to be redundantly identified in order to delete subscription records that are already invalid, whereby a space is reserved for subsequent subscription records that need to be initiated.

In other examples of this embodiment, a period over which the UDM counts the total number of subscription records of each user may not be exactly the same, even a statistical period of a total number of subscription records of a same user may be different. For example, in one example, after the UDM counts a total number of subscription records for each of multiple users, the time at which each user is next counted for the total number of subscription records may be decided according to the number of currently owned subscription records each user in the UDR. For example, a number of current existing subscription records of a user a in the UDR is relatively small, and thus, the UDM may determine a moment farther from the current moment as the next time of statistic for the user a. However, a number of current existing subscription records of a user b in the UDR is relatively large, the UDM may determine a moment closer to the current moment as the next time of statistic for the user b.

In addition to the statistics described above, in one example of this embodiment, after the UDM receives a subscription request for a user, the UDM may count a total number of current subscription records of the user in the UDR, so that a subscription request initiated for the user is a condition that triggers the UDM to count the total number of subscription records for the user.

For the UDM in this embodiment, the measurement of whether a total number of subscription records of a user in the UDR is excessive is performed through a preset threshold, that is, if a total number of subscription records of a user in the UDR reaches the preset threshold, then the UDM may determine that a total number of current subscription records of this user is excessive, and if a total number of subscription records of a user in the UDR does not reach the preset threshold, then the total number of current subscription records of the user may be determined to be within a normal range.

In the related art, the UDM side has set a system threshold for the total number of subscription records of the user, and once the UDM determines that the total number of subscription records of the user in the UDR reaches this system threshold, then the NF can no longer successfully initiate a subscription request for that user. In this embodiment, when a total number of subscription records of the user on the UDR side reaches a preset threshold, which simply means that the UDM needs to delete redundant subscription records of this user in the UDR, but not on behalf that the NF has been unable to successfully initiate a subscription request for that user, therefore the preset threshold is less than the system threshold at the UDM side. Accordingly, the UDM may delete the redundant subscription records of the user in advance before the total number of the subscription records of the user reaches the system threshold, and the influence on the normal data subscription process of the NF for the user is avoided. Thus, in this embodiment, the UDM manages the subscription records of the user in the UDR through a preset threshold less than the system threshold, which is a "preventive management mechanism" and solves the problem of the total number of the subscription records of the user exceeding the limit in advance.

In S304, the UDM sends a redundant record identification request carrying the record indication information to the subscription initiation NF.

After the UDM determines that the total number of subscription records of a user in the UDR reaches the preset threshold, the redundant record identification request may be sent to the subscription initiation NF so as to instruct the subscription initiation NF to perform the redundant identification on subscription records belonging to that user initiated by the subscription initiation NF. The subscription record of one user stored in the UDR is not necessarily initiated by one NF alone, for example, in one example, the UDR stores a subscription record initiated by the AMF for the user a, also stores a subscription record initiated by the SMF and the SMSF for that user a, therefore, although a single subscription record is unique to a single subscription record subscription initiation NF, all subscription records of a user may correspond to multiple subscription initiation NFs, respectively. Thus, if all subscription records of the user in the UDR are initiated by a same subscription initiation NF, then the UDM only sends the redundant record identification request to this one subscription initiation NF when it is requested by the user for the redundant identification by the subscription initiation NF; but if all subscription records of the user in the UDR are initiated by two or more subscription initiation NFs, then the UDM sends redundant record identification requests to these subscription initiation NFs, respectively when it is requested by the user for the redundant identification by the subscription initiation NF.

In this embodiment, since the UDM manages subscription records for one user (referred to herein as the "target user" for ease of introduction) currently, the record indication information needs to be carried in the redundant record identification request sent by the UDM so as to indicate to each subscription initiation NF that the target subscription record is the subscription record for that target user. In some examples of this embodiment, the user identifier of the target user is included as the record indication information in the redundant record identification request sent to whichever subscription initiation NF. After each subscription initiation NF receives the redundant record identification request, each subscription initiation NF identifies its own initiated subscription record belonging to the target user. In this way, the UDM may be simpler in generating redundant record identification requests for each subscription initiation NF.

In other examples of this embodiment, the UDM may screen out all subscription records belonging to the target user from the UDR, then classify all subscription records of this target user according to different subscription initiation NF, and then determine which subscription records are initiated by each subscription initiation NF for this target user. In this way, when the UDM sends the redundant record identification request to one of the subscription initiation NFs, the UDM may carry the subscription identifier of the subscription records initiated by the subscription initiation NF as the record indication information in the redundant record identification request.

In other examples of this embodiment, when the UDM sends a redundant record identification request for a target user to a subscription initiation NF, it may not be necessary to carry the subscription identifiers of all subscription records initiated by this subscription initiation NF for the target user in the redundant record identification request, rather only carry the subscription identifiers of one or part of all subscription records. In this way, after the subscription initiation NF receives the redundant record identification request, only part of target subscription records may be determined according to the record indication information in the redundant record identification request, however, in combination with the rule that the subscription initiation NF agrees with the UDM in advance, the subscription initiation NF may also determine other target subscription records.

In S306, the subscription initiation NF performs a redundant identification of a subscription record belonging to this user.

After the subscription initiation NF receives the redundant record identification request, the target subscription record is determined firstly according to the record indication information in the redundant record identification request. In this embodiment, the target subscription record is all subscription records that the subscription initiation NF is initiated for the target user. Subsequently, the subscription initiation NF will perform a redundant identification for the target subscription record to obtain a corresponding redundant record identification result.

In S308, the subscription initiation NF sends the redundant record identification result to the UDM. After the redundant record identification result is acquired, the subscription initiation NF sends the redundant record identification result to the UDM for cleaning and managing the identified redundant subscription records by the UDM.

In S310, the UDM deletes a redundant subscription record corresponding to this user in the UDR according to the redundant record identification.

In some examples of this embodiment, the redundant record identification result sent by the subscription initiation NF to the UDM includes the subscription identifier of the redundant subscription record identified by the subscription initiation NF. In these examples, the UDM may perform a subscription record deletion directly according to the subscription identifier in the redundant record identification result. In other examples of this embodiment, what is carried in the redundant record identification result sent by the subscription initiation NF to the UDM is the subscription identifier of the valid subscription record, the subscription record in the redundant record identification result to which the subscription identifier corresponds is a current valid subscription record for the target user, but this does not mean that all of the subscription records remaining for that target user are redundant subscription records, this is mainly because the target user may correspond to more than one subscription initiation NF, the UDM cannot recognize that all other subscription records are redundant subscription records according to the subscription identifier of a valid subscription record fed back by one subscription initiation NF, the UDM needs to identify a valid subscription record corresponding to the target user in combination with the valid subscription identifiers fed back by all subscription initiation NFs before the remaining subscription records may be cleaned as redundant subscription records.

According to the subscription record management method provided in this embodiment, not only redundant subscription records left behind by the user in the UDR may be identified and deleted by cooperation of the UDM and the subscription initiation NF. Moreover, the UDM, before requesting the corresponding subscription initiation NF to identify a subscription record corresponding to a user, it is also necessary to determine whether the total number of subscription records currently stored by the user in the UDR has reached the preset threshold. In this way, the UDM only needs to redundantly identify and purge a subscription record of this user when the total number of current subscription records of the user reaches a certain threshold, for those users whose total number of current subscription records has not yet reached the preset threshold, the management intervention of redundant subscription records may be temporarily left undone, which may reduce the burden on UDM for subscription record management.

### Example three

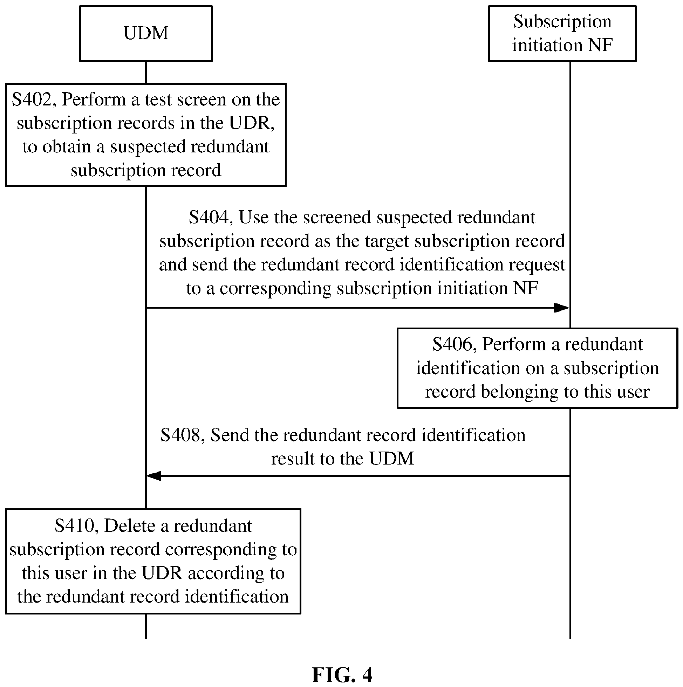

This embodiment will continue to elaborate on the subscription record management method with reference to the flowchart shown in FIG. 4.

In S402, the UDM performs a test screen on the subscription records in the UDR, to obtain a suspected redundant subscription record.

In this embodiment, when the UDM requires a redundant cleaning of all subscription records in the UDR or a subscription record of a user among all subscription records in the UDR, the UDM does not send the redundant record identification request directly to a corresponding subscription initiation NF, but does preliminary screen itself for the subscription records that need to be identified, to obtain the suspected redundant subscription record. As the name implies, the "suspected redundant subscription record" refers to a subscription record suspected to be the redundant subscription record according to the preliminary screened result of the UDM, that is, a subscription record that may be the redundant subscription record.

The objects for which the UDM is preliminary screened may be determined according to the user, that is, all subscription records corresponding to a user identifier are preliminary screened. In some examples of this embodiment, a reason for triggering the UDM to preliminary screen may be when the UDM regularly screens for user subscription records comes; or it may also be because a total number of current existing subscription records of a user in the UDR has reached a preset threshold, and thus the UDM needs to preliminary screen subscription records corresponding to the user.

The preliminary screening of subscription records by the UDM follows certain screening rules, and in some examples of this embodiment, the UDM will have at least one of several subscription records as suspected redundant subscription records according to the screening rules: (1) a first subscription record, where the first subscription record is initiated by a first session management function (SMF), and registration information of the first SMF does not exist at a unified data management (UDM) side; (2) a second subscription record, where the second subscription record is initiated by a first single network slice selection assistance information (S-NSSAI) under a second SMF, and registration information of any SMF corresponding to the first S-NSSAI does not exist at a UDM side; (3) a third subscription record, where the third subscription record is initiated by a first data network name (DNN) under a third SMF, and registration information of any SMF corresponding to the first DNN does not exist at a UDM side; (4) a fourth subscription record, where the fourth subscription record is initiated by a second DNN corresponding to a second S-NSSAI under a fourth SMF, and registration information of an SMF corresponding to the second S-NSSAI or the second DNN does not exist at a UDM side; (5) a fifth subscription record, where the fifth subscription record is initiated by a fifth SMF, and access and mobility management function (AMF) registration information valid for the fifth SMF does not exist at a UDM side, and mobility management entity (MME) registration information valid for the fifth SMF does not exist at the UDM side; (6) a sixth subscription record, where the sixth subscription record is initiated by a sixth SMF, registration information of the sixth SMF and MME registration information of the sixth SMF exist at a UDM side, and AMF registration information of the sixth SMF and an access point name (APN) corresponding to a session DNN of the sixth SMF do not exist at the UDM side; (7) a seventh subscription record, where the seventh subscription record is initiated by an AMF, and 3rd generation partnership project (3GPP) registration information of the AMF or non-3rd generation partnership project (NON-3GPP) registration information of the AMF does not exist at a UDM side; (8) an eighth subscription record, where the eighth subscription record is initiated by a short message service function (SMSF), and 3GPP registration information or non-3GPP registration information of the SMSF does not exist at a UDM side; and (9) a ninth subscription record, where the ninth subscription record is a subscription record exceeding an expire date of the ninth subscription record.

In an embodiment, valid AMF registration information refers to AMF registration information where AMF is successfully registered at a UDM side and the registration reserved by the UDM is successful, and the valid MME registration information refers to MME registration information where MME is successfully registered at the UDM side and a registration reserved by the UDM is successful.

The above-mentioned first SMF does not specifically refer to one SMF, the first SMF is simply the SMF that initiated the first subscription record, therefore any one SMF could be the first SMF that initiated the first subscription record. Also included are a "second SMF", a "third SMF", ... , a "sixth SMF" as well as a "first DNN", a "second DNN", a "first S-NSSA", a "second S-NSSA", etc., which need to be understood in the same manner. On this basis, the first SMF and the second SMF may be a same SMF or different SMFs, and the first S-NSSA and the second S-NSSA may be a same S-NSSA or different S-NSSAs, as well as the understanding of the corresponding other objects.

In S404, the UDM uses the screened suspected redundant subscription record as the target subscription record and sends the redundant record identification request to a corresponding subscription initiation NF.

After the preliminary screening by the UDM, the suspected redundant subscription record will be determined. As to whether the suspected redundant subscription record is really a redundant subscription record, the suspected redundant subscription record may be determined only after the corresponding subscription initiation NF is identified. Thus, in this embodiment, the UDM may take the screened suspected redundant subscription record as the target subscription record and send the redundant record identification request to subscription initiation NFs corresponding to these target subscription records.

In S406, the subscription initiation NF performs a redundant identification on a subscription record belonging to this user.

After the subscription initiation NF receives the redundant record identification request, the target subscription record is determined according to the record indication information in the redundant record identification request. In one example of this embodiment, in order for the UDM to specify precisely the target subscription record to the subscription initiation NF, a subscription identifier of a suspected redundant subscription record corresponding to the subscription initiation NF may be carried in the redundant record identification request. Alternatively, the UDM carries the subscription identifiers of all suspected redundant subscription records determined by itself in the redundant record identification request, the subscription initiation NF determines which subscription records are initiated by itself according to the subscription identifier and are target subscription records which need to be redundantly identified by itself. Subsequently, the subscription initiation NF performs an identification process on the target subscription record that requires redundant identification by itself and obtains a corresponding redundant record identification result.

In S408, the subscription initiation NF sends the redundant record identification result to the UDM. After the redundant record identification result is obtained, the subscription initiation NF sends the redundant record identification result to the UDM for cleaning management of the identified redundant subscription records by the UDM.

In S410, the UDM deletes a redundant subscription record corresponding to this user in the UDR according to the redundant record identification.

In some examples, the subscription identifier of the redundant subscription record identified by the subscription initiation NF is included in the redundant record identification result sent by the subscription initiation NF, therefore the UDM may delete the subscription record directly according to the subscription identifier in the redundant record identification result. In some further examples of this embodiment, the subscription identifier of the valid subscription record is carried in the redundant record identification result sent by the subscription initiation NF to the UDM, therefore the UDM will firstly identify a valid subscription record corresponding to the target user in combination with the valid subscription identifiers fed back by all subscription initiation NFs and then clean the remaining subscription record as the redundant subscription record.

According to the subscription record management method provided in this embodiment, the UDM, before sending the redundant record identification request to the subscription initiation NF, firstly preliminary screens the subscription records preliminarily by itself, excludes currently valid subscription records, queries the subscription initiation NF only if a possible redundant subscription record is truly invalid, in this way, the objects for which the subscription initiation NF performs the redundant identification may be reduced, and thus the identification burden of the subscription initiation NF may be reduced.

### Example four.

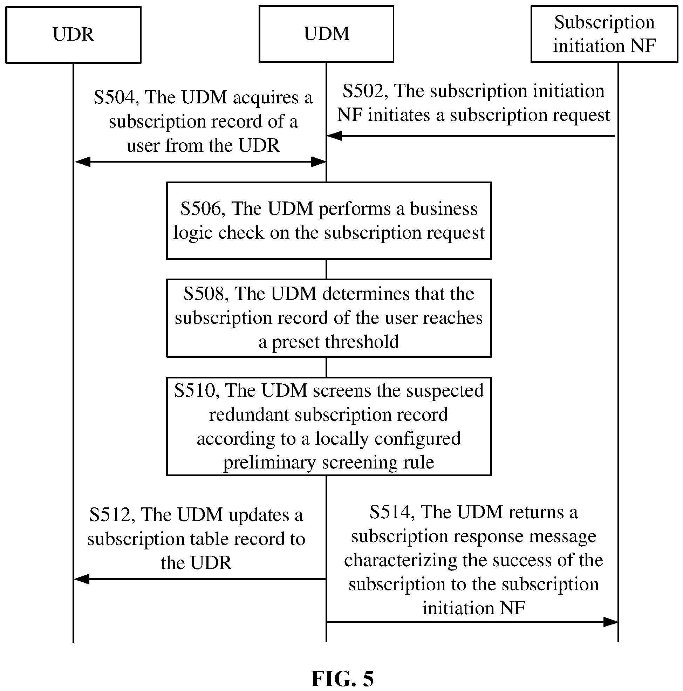

This embodiment will continue to introduce the foregoing method in conjunction with the accompanying drawings and examples, please refer to a flowchart of a UDM for preliminary screening as shown in FIG. 5.

In S502, the subscription initiation NF initiates a subscription request.

In this embodiment, the subscription initiation NF may be at least one of an AMF, an SMF, an SMSF, and the like.

In S504, the UDM acquires a subscription record of a user from the UDR.

The subscription request sent by the subscription initiation NF indicates the data change notice of which user the subscription initiation NF requires to subscribe to the UDM, therefore, when the UDM receives the subscription request, the user to which the subscription request corresponds may be determined, and then the UDM sends a message to the UDR to acquire the subscription record of this user stored by the UDR.

In S506, the UDM performs a business logic check on the subscription request.

The business logic check is that the UDM verifies that the subscription request complies with the requirements of the agreement or the like.

In S508, the UDM determines that the subscription record of the user reaches a preset threshold.

In some examples of this embodiment, the preset threshold value may also be a ratio value, such as a preset ratio value, the preset ratio value identifies a ratio between the total number of current subscription records of the user in the UDR and the system threshold of the UDM. For example, in some examples of this embodiment, the preset ratio may be configured to be 80%.

In S510, the UDM screens the suspected redundant subscription record according to a locally configured preliminary screening rule.

The preliminary screening rule is actually just a rule that the UDM identifies which subscription records as suspected redundant subscription records, and the preliminary screening rule locally configured by the UDM in this embodiment may be found in the embodiment three and is not repeated here.

When the UDM identifies a suspected redundant subscription record, a redundant record identification request may be initiated to a corresponding subscription initiation NF immediately, that is, a preliminary screening process of the UDM is continuous with the redundant identification process of the subscription initiation NF. However, in other examples of this embodiment, the UDM may not immediately initiate the redundant record identification request, but rather mark these suspected redundant subscription records and request the subscription initiation NF for the redundant identification in a subsequent process.

In S512, the UDM updates a subscription table record to the UDR.

In S514, the UDM returns a subscription response message characterizing the success of the subscription to the subscription initiation NF.

In FIG. 5, the timing of parts of the flow may vary, for example, in one example of this embodiment, the UDM firstly performs a service logic check on the subscription request, and acquires the subscription record of the user from the UDR after the check is passed.

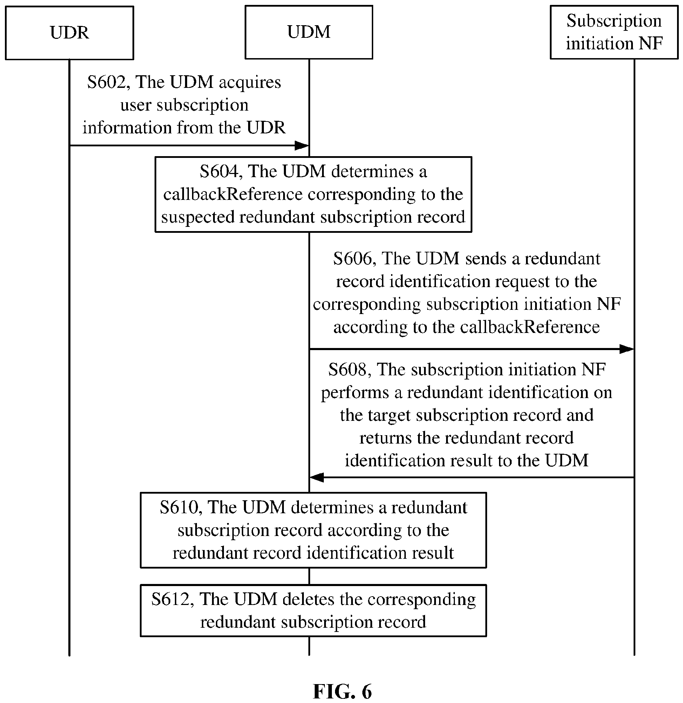

Please refer to FIG. 6, which shows a flowchart of a process of the subscription initiation NF performing the redundant identification.

In S602, the UDM acquires user subscription information from the UDR.

Since the UDM previously marked the suspected redundant subscription records in the subscription records according to the flowchart shown in FIG. 5, the UDM may determine which suspected redundant subscription records currently need to be identified after the user subscription information is acquired from the UDR.

In S604, the UDM determines a callbackReference corresponding to the suspected redundant subscription record.

After the suspected redundant subscription records are determined, the UDM may acquire the callbackReference corresponding to the suspected redundant subscription record.

In S606, the UDM sends a redundant record identification request to the corresponding subscription initiation NF according to the callbackReference.

In other examples of this embodiment, when the UDM sends a redundant record identification request to one subscription initiation NF, the UDM may carry the subscription identifier of suspected redundant subscription records initiated by the subscription initiation NF as the record indication information in the redundant record identification request.

In other examples of this embodiment, when the UDM sends a redundant record identification request for a user to the subscription initiation NF, the UDM may not be necessary to carry subscription identifiers of all suspected redundant subscription records initiated by the subscription initiation NF for the user, rather only carry subscription identifiers of one or part of all suspected redundant subscription records. After the subscription initiation NF receives the redundant record identification request, the subscription initiation NF determines part of the target subscription records according to the record indication information in the redundant record identification request, but determines other target subscription records in conjunction with rules previously agreed by the subscription initiation NF with the UDM.

In S608, the subscription initiation NF performs a redundant identification on the target subscription record and returns the redundant record identification result to the UDM.

It is assumed that a subscription identifier of only one suspected redundant subscription record initiated by the subscription initiation NF for a corresponding user is included in the redundant record identification request sent by the UDM to the subscription initiation NF. In this embodiment, the subscription initiation NF may carry information in the redundant record identification result that specifically indicates whether the subscription record indicated in the redundant record identification request is valid, while the subscription initiation NF may also indicate whether the subscription initiation NF remains valid for other subscription records initiated by a same user. In S610, the UDM determines a redundant subscription record according to the redundant record identification result.

The subscription identifier of the redundant subscription record identified by the subscription initiation NF is included in the redundant record identification result sent by the subscription initiation NF, therefore the UDM may delete a subscription record directly according to the subscription identifier in the redundant record identification result. In other examples of this embodiment, the subscription identifier of the valid subscription record is carried in the redundant record identification result sent by the subscription initiation NF to the UDM, therefore the UDM will firstly identify the valid subscription record corresponding to the target user in combination with the valid subscription identifiers fed back by all subscription initiation NF and then clean the remaining subscription record as redundant Subscription Record.

In S612, the UDM deletes the corresponding redundant subscription record.

According to the subscription record management method provided in this embodiment, the NF is not required to carry a reasonable expire date or an implicitUnsubscribe label in the subscription request when it initiates the subscription request, the UDM may itself communicate with the NF that initiated the subscription record before determining that a subscription record of a user in the UDR is about to reach the system threshold, request the corresponding NF for the redundant identification, therefore, the redundant subscription records are determined and cleared in time, the clearing of the redundant records in an abnormal scenario is achieved, and the continuity of the subscription service is ensured.

### Embodiment five

This embodiment provides a storage medium, the storage medium may have stored therein one or more computer programs that may be read, compiled and executed by one or more processors, in this embodiment, the storage medium may store a subscription record management program, the subscription record management program is executable by the one or more processors to implement the flow of the subscription record management method at a UDM side in any one of the subscription record management methods described in any one of the preceding embodiments.

In another example of this embodiment, the storage medium may store a subscription record identification program, and the subscription record identification program is executable by the one or more processors to implement the flow of the subscription record identification method on a subscription initiation NF side in any one of the subscription record identification methods described in any one of the preceding embodiments.

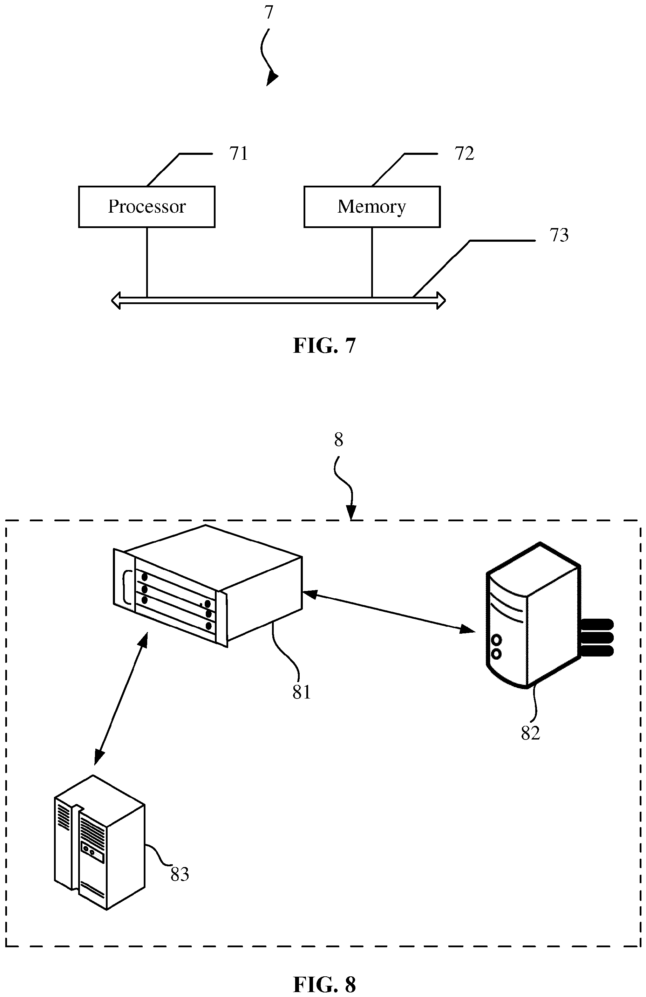

A network device is further provided in this embodiment, as shown in FIG. 7, the network device 7 includes a processor 71, a memory 72, and a communication bus 73 configured to connect the processor 71 and the memory 72. In some examples, the network device 7 is a UDM, in this case, the memory 72 of the network device 7 may be the aforementioned storage medium storing the subscription record management program, the processor 71 may read the subscription record management program, and the subscription record management program is compiled and executed to implement the flow of the subscription record management method at a UDM side described in any one of the foregoing embodiments. The processor 71 sends a redundant record identification request to the subscription initiation NF, to request that the subscription initiation NF identify whether the target subscription record is the redundant subscription record. Subsequently, the processor 71 receives a redundant record identification result sent by the subscription initiation NF according to the redundant record identification request and deletes the redundant subscription record in the UDR according to the redundant record identification result.

In some examples of this embodiment, record indication information is included in the redundant record identification request, and the record indication information is used for indicating a target subscription record that needs to be redundantly identified by the subscription initiation NF.

Optionally, the record indication information includes either of: a subscription identifier of a subscription record, or a user identifier of a user to which a subscription record belongs, where the user identifier is used for instructing the subscription initiation NF to use the subscription record belonging to the user as the target subscription record.

In some examples of this embodiment, the processor 71 may preliminary screen subscription records in the UDR before sending the redundant record identification request to the subscription initiation NF, to obtain a suspected redundant subscription record, and the processor 71 may then use the screened suspected redundant subscription record as the target subscription record.

In some examples of this embodiment, the suspected redundant subscription record includes at least one of following records: a first subscription record, where the first subscription record is initiated by a first SMF, and registration information of the first SMF does not exist at a UDM side; a second subscription record, where the second subscription record is initiated by a first S-NSSAI under a second SMF, and registration information of an SMF corresponding to the first S-NSSAI does not exist at a UDM side; a third subscription record, where the third subscription record is initiated by a first DNN under a third SMF, and registration information of any SMF corresponding to the first DNN does not exist at a UDM side; a fourth subscription record, where the fourth subscription record is initiated by a second DNN corresponding to a second S-NSSAI under a fourth SMF, and registration information of any SMF corresponding to the second S-NSSAI or the second DNN does not exist at a UDM side; a fifth subscription record, where the fifth subscription record is initiated by a fifth SMF, and AMF registration information valid for the fifth SMF does not exist at a UDM side, and meanwhile, MME registration information valid for the fifth SMF does not exist at the UDM side; a sixth subscription record, where the sixth subscription record is initiated by a sixth SMF, registration information of the sixth SMF and MME registration information of the sixth SMF exist at a UDM side, and AMF registration information of the sixth SMF and an APN corresponding to a session DNN of the sixth SMF do not exist at the UDM side; a seventh subscription record, where the seventh subscription record is initiated by an AMF, and 3GPP registration information of the AMF or NON-3GPP registration information of the AMF does not exist at a UDM side; an eighth subscription record, where the eighth subscription record is initiated by an SMSF, and 3GPP registration information or non-3GPP registration information of the SMSF does not exist at a UDM side; and a ninth subscription record, where the ninth subscription record is a subscription record exceeding an expire date of the ninth subscription record.

Optionally, the processor 71 firstly determines that a number of existing subscription records of a user in the UDR reaches a preset threshold before detecting existing subscription records in the UDR. The processor 71 may detect an existing subscription record of the user in the UDR upon detecting the existing subscription records in the UDR.

Among other examples, the network device 7 is the subscription initiation NF, in this case, the memory 72 of the network device 7 may be the aforementioned storage medium in which the subscription record identification program is stored, the processor 71 may read the subscription record identification program, and the subscription record identification program is compiled and executed to implement the flow of the subscription record identification method on a subscription initiation NF side described in any one of the foregoing embodiments. The processor 71 receives the redundant record identification request sent by the UDM, then determines a target subscription record requiring a redundant identification according to the redundant record identification request, then, the processor 71 determines whether the target subscription record is the redundant subscription record, to obtain a redundant record identification result, and sends the redundant record identification result to the UDM.

In some examples of this embodiment, the redundant record identification request includes record indication information, and the record indication information is a subscription identifier of the subscription record. When the processor 71 determines the target subscription record requiring the redundant identification according to the redundant record identification request, all subscription records of a user to which the subscription identifier corresponds may be configured as the target subscription record.

This embodiment further provides a subscription record management system. Referring to FIG. 8, the subscription record management system 8 includes a UDM 81, a UDR 82, and at least one subscription initiation NF 83, where the UDM 81 communicates with the UDR 82 and each subscription initiation NF 83. The UDR 82 is configured to store a subscription record initiated by each subscription initiation NF 83, the UDM 81 is a network device in which the processor in FIG. 7 executes a subscription record management program to implement the subscription record management method, and the subscription initiation NF 83 is a network device in which the processor in FIG. 7 executes the subscription record identification program to implement the subscription record identification method.

Details of implementing the subscription record management method by the UDM 81 and implementing the subscription record identification method by the subscription initiation NF 83 may be referred to the embodiment one to the embodiment four, and details are not described herein again.

According to the subscription record management system, the network device, and the storage medium provided in this embodiment, the UDM sends the redundant record identification request to the subscription initiation NF. The redundant record identification request is configured for requesting the subscription initiation NF to identify whether the target subscription record is an invalid redundant subscription record. After receiving the redundant record identification request, the subscription initiation NF firstly determines the target subscription record requiring the redundant identification, and then performs the redundant identification on the target subscription record to determine whether the target subscription record is an invalid redundant subscription record, and sends the redundant record identification result to the UDM. The UDM deletes the redundant subscription record in the UDR according to the redundant record identification result. An embodiment of the present application provides a method for clearing a redundant subscription record, the UDM determines a redundant subscription record stored in the UDR in cooperation with the subscription initiation NF, and then actively deletes the redundant subscription record, so that an indicator that the redundant subscription record occupies a subscription record of a user may be avoided, the possibility that the NF cannot initiate the data subscription operation since the total number of data subscription records of the user at the UDM side is too large is reduced, and thus the normal and continuous data subscription service is ensured.

All or some of the steps of the methods, systems, functional modules/units in the apparatuses disclosed above may be implemented as software (may be implemented in a program code executable by a computing apparatus), firmware, hardware, and suitable combinations thereof. In a hardware implementation, a division between functional modules/units mentioned in the above description does not necessarily correspond to the division of physical assemblies; for example, one physical assembly may have multiple functions, or one function or step may be performed by multiple physical assemblies in cooperation. Some or all of the physical assemblies may be implemented as software executed by a processor, such as a central processing unit, a digital signal processor or a microprocessor, or may be implemented as hardware, or may be implemented as an integrated circuit, such as an application specific integrated circuit. Such software may be distributed on a computer readable medium, may be performed by the computing apparatus and, in some cases, steps shown or described may be performed in a different order than here, and the computer readable medium may include a computer storage medium (or a non-transitory medium) and a communication medium (or a transitory medium). The term "computer storage medium" includes a volatile and nonvolatile, removable and non-removable medium implemented in any method or technology for storage of information (such as, a computer readable instruction, a data structure, a program module or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disk storage, magnetic cassettes, magnetic tape, magnetic disk storage or other magnetic storage devices, or any other media which may be configured to store the desired information and which may be accessed by a computer. Further, the communication medium typically embodies the computer readable instruction, the data structure, the program module, or other data in a modulated data signal such as a carrier wave or other transport mechanisms, and may include any information delivery media. Therefore, the present application is not limited to any particular combination of hardware and software.

The communication medium generally includes a computer-readable instruction, a data structure, a computer program module, or other data in carriers or in modulated data signals transported in other transport mechanisms and may include any information delivery medium. Therefore, the present application is not limited to any particular combination of hardware and software.

## Claims

1. A subscription record management method, executed at a unified data management, UDM, entity comprising:
sending (S102) a redundant record identification request to a subscription initiation network function, NF, wherein the redundant record identification request is configured for requesting the subscription initiation NF to identify whether a target subscription record in a unified data repository, UDR, is a redundant subscription record, and the redundant subscription record is an invalid subscription record;
receiving a redundant record identification result sent by the subscription initiation NF according to the redundant record identification request, wherein the redundant record identification result is used for indicating whether the target subscription record is the redundant subscription record; and
deleting the redundant subscription record in a case where the redundant record identification result indicates that the target subscription record is the redundant subscription record;
wherein the NF comprises: an access and mobility management function, AMF, a first session management function, SMF, and a short message service function, SMSF.

2. The method of claim 1, wherein the redundant record identification request comprises record indication information, and the record indication information is used for indicating a target subscription record which requires the subscription initiation NF to perform a redundant identification.

3. The method of claim 2, wherein the record indication information comprises one of: a subscription identifier of a subscription record, or a user identifier of a user to which a subscription record belongs, wherein the user identifier is used for instructing the subscription initiation NF to use the subscription record belonging to the user as the target subscription record.

4. The method of any one of claims 1 to 3, wherein before the sending the redundant record identification request to the subscription initiation NF, the method further comprises:
preliminary screening subscription records in the UDR to obtain a suspected redundant subscription record; and
configuring the screened suspected redundant subscription record as the target subscription record.

5. The method of claim 4, wherein the suspected redundant subscription record comprises at least one of following records:
a first subscription record, wherein the first subscription record is initiated by a first SMF and registration information of the first SMF does not exist at a UDM side;
a second subscription record, wherein the second subscription record is initiated by a first single network slice selection assistance information, S-NSSAI, under a second SMF, and registration information of an SMF corresponding to the first S-NSSAI does not exist at the UDM side;
a third subscription record, wherein the third subscription record is initiated by a first data network name, DNN, under a third SMF, and registration information of an SMF corresponding to the first DNN does not exist at the UDM side;
a fourth subscription record, wherein the fourth subscription record is initiated by a second DNN corresponding to a second S-NSSAI under a fourth SMF, and registration information of an SMF corresponding to the second S-NSSAI or the second DNN does not exist at the UDM side;
a fifth subscription record, wherein the fifth subscription record is initiated by a fifth SMF, and AMF registration information valid for the fifth SMF does not exist at a UDM side, and mobility management entity, MME, registration information valid for the fifth SMF does not exist at the UDM side;
a sixth subscription record, wherein the sixth subscription record is initiated by a sixth SMF, registration information of the sixth SMF and MME registration information of the sixth SMF exist at a UDM side, and AMF registration information of the sixth SMF and an access point name, APN, corresponding to a session DNN of the sixth SMF do not exist at the UDM side;
a seventh subscription record, wherein the seventh subscription record is initiated by an AMF, and 3rd generation partnership project, 3GPP, registration information of the AMF or non-3rd generation partnership project, NON-3GPP, registration information of the AMF does not exist at the UDM side;
an eighth subscription record, wherein the eighth subscription record is initiated by the SMSF, and 3GPP registration information or non-3GPP registration information of the SMSF does not exist on the UDM side; and
a ninth subscription record, wherein the ninth subscription record is a subscription record exceeding an expire date of the ninth subscription record.

6. The method of claim 4, wherein before the preliminary screening the subscription records in the UDR, the method further comprises:
determining that a number of subscription records of a user in the UDR reaches a preset threshold;
wherein the preliminary screening the subscription records in the UDR comprises:
detecting the subscription records of the user in the UDR.

7. A subscription record identification method, executed at a subscription initiation network function, NF, comprising:
receiving a redundant record identification request sent by a unified data management, UDM, entity;
determining a target subscription record requiring a redundant identification according to the redundant record identification request;
determining whether the target subscription record is a redundant subscription record, to obtain a redundant record identification result; and
sending the redundant record identification result to the UDM entity
wherein the redundant subscription record is an invalid subscription record, and the NF comprises: an access and mobility management function, AMF, a first session management function, SMF, and a short message service function, SMSF.

8. The method of claim 7, wherein the redundant record identification request comprises record indication information, and the record indication information is a subscription identifier of a subscription record;
wherein the determining the target subscription record requiring the redundant identification according to the redundant record identification request comprises:
configuring all subscription records of a user to which the subscription identifier corresponds as the target subscription record.

9. A network device, comprising a processor (71), a memory (72) and a communication bus (73), wherein,
the communication bus (73) is configured to enable a connective communication between the processor (71) and the memory (72); and
the processor (71) is configured to execute at least one program stored in the memory (72) to implement the subscription record management method of any of claims 1 to 6; or, the processor is configured to execute at least one program stored in the memory (72) to implement the subscription record identification method of claim 7 or 8.

10. A subscription record management system, comprising a unified data management, UDM, entity, (81), a unified data storage, UDR (82), and at least one subscription initiation network function, NF (83), wherein the UDM entity (81) is in communication connection with the UDR (82) and each subscription initiation NF (83) of the at least one subscription initiation NF (83); the UDM entity (81) is a network device in which the processor of claim 9 executes a program to implement the subscription record management method of any one of claims 1 to 6, and the subscription initiation NF is a network device in which the processor of claim 9 executes the program to implement the subscription record identification method of claim 7 or 8.

11. A storage medium, storing at least one of a subscription record management program or a subscription record identification program, wherein the subscription record management program is executable by at least one processor to implement the subscription record management method of any one of claims 1 to 6; and the subscription record identification program is executable by the at least one processor to implement the subscription record identification method of claim 7 or 8.

## Patentansprüche

1. Verfahren zur Verwaltung von Abonnementaufzeichnungen, das auf einer einheitlichen Datenverwaltungsentität (unified data management, UDM) ausgeführt wird, umfassend:
Senden (S102) einer redundanten Aufzeichnungsidentifizierungsanforderung an eine Abonnementinitiierungs-Netzwerkfunktion (network function, NF), wobei die redundante Aufzeichnungsidentifizierungsanforderung dazu konfiguriert ist, die Abonnementinitiierungs-NF aufzufordern, zu identifizieren, ob eine Zielabonnementaufzeichnung in einem einheitlichen Datenspeicher (unified data repository, UDR) eine redundanter Abonnementaufzeichnung ist und die redundante Abonnementaufzeichnung eine ungültige Abonnementaufzeichnung ist;
Empfangen eines redundanten Aufzeichnungsidentifizierungsergebnisses, das durch die Abonnementinitiierungs-NF gemäß der redundanten Aufzeichnungsidentifizierungsanforderung gesendet wird, wobei das redundante Aufzeichnungsidentifizierungsergebnis zum Angaben, ob die Zielabonnementaufzeichnung die redundante Abonnementaufzeichnung ist, verwendet wird; und
Löschen der redundanten Abonnementaufzeichnung in dem Fall, in dem das redundante Aufzeichnungsidentifizierungsergebnis angibt, dass die Zielabonnementaufzeichnung die redundante Abonnementaufzeichnung ist;
wobei die NF Folgendes umfasst: eine Zugriffs- und Mobilitätsverwaltungsfunktion (access and mobility management function, AMF), eine erste Sitzungsverwaltungsfunktion (first session management function, SMF) und eine Kurznachrichtendienstfunktion (short message service function, SMSF) .

2. Verfahren nach Anspruch 1, wobei die redundante Aufzeichnungsidentifizierungsanforderung Aufzeichnungsangabeninformationen umfasst und die Aufzeichnungsangabeninformationen zum Angeben einer Zielabonnementaufzeichnung verwendet werden, der die Abonnementinitiierungs-NF zum Durchführen einer redundanten Identifizierung erfordert.

3. Verfahren nach Anspruch 2, wobei die Aufzeichnungsangabeninformationen eines von Folgendem umfassen: eine Abonnementkennung einer Abonnementaufzeichnung oder eine Benutzerkennung eines Benutzers, zu dem eine Abonnementaufzeichnung gehört, wobei die Benutzerkennung zum Anweisen der Abonnementinitiierungs-NF verwendet wird, die zu dem Benutzer gehörende Abonnementaufzeichnung als die Zielabonnementaufzeichnung zu verwenden.

4. Verfahren nach einem der Ansprüche 1 bis 3, wobei vor dem Senden der redundanten Aufzeichnungsidentifizierungsanforderung an die Abonnementinitiierungs-NF das Verfahren ferner Folgendes umfasst:
vorläufiges Überprüfen von Abonnementaufzeichnungen in dem UDR, um eine mutmaßlich redundante Abonnementaufzeichnung zu erlangen; und
Konfigurieren der überprüften mutmaßlich redundanten Abonnementaufzeichnung als die Zielabonnementaufzeichnung.

5. Verfahren nach Anspruch 4, wobei die mutmaßlich redundante Abonnementaufzeichnung mindestens eine der folgenden Aufzeichnungen umfasst:
eine erste Abonnementaufzeichnung, wobei die erste Abonnementaufzeichnung durch eine erste SMF initiiert wird und Registrierungsinformationen der ersten SMF nicht auf einer UDM-Seite vorhanden sind;
eine zweite Abonnementaufzeichnung, wobei die zweite Abonnementaufzeichnung durch eine erste einzelne Netzwerk-Slice-Auswahlunterstützungsinformation (single network slice selection assistance information, S-NSSAI) unter einer zweiten SMF initiiert wird und Registrierungsinformationen einer SMF entsprechend der ersten S-NSSAI nicht auf der UDM-Seite vorhanden sind;
eine dritte Abonnementaufzeichnung, wobei die dritte Abonnementaufzeichnung durch einen ersten Datennetzwerknamen (data network name, DNN) unter einer dritten SMF initiiert wird und Registrierungsinformationen einer SMF entsprechend des ersten DNN nicht auf der UDM-Seite vorhanden sind;
eine vierte Abonnementaufzeichnung, wobei die vierte Abonnementaufzeichnung durch einen zweiten DNN, der der zweiten S-NSSAI entspricht, unter einer vierten SMF initiiert wird und Registrierungsinformationen einer SMF entsprechend der zweiten S-NSSAI oder dem zweiten DNN nicht auf der UDM-Seite vorhanden sind;
eine fünfte Abonnementaufzeichnung, wobei die fünfte Abonnementaufzeichnung durch eine fünfte SMF initiiert wird, und AMF-Registrierungsinformationen, die für die fünfte SMF gültig sind, nicht auf einer UDM-Seite vorhanden sind, und Mobilitätsverwaltungsentitäts-Registrierungsinformationen
(mobility management entity, MME), die für die fünfte SMF gültig sind, nicht auf der UDM-Seite vorhanden sind;
eine sechste Abonnementaufzeichnung, wobei die sechste Abonnementaufzeichnung durch eine sechste SMF initiiert wird, Registrierungsinformationen der sechsten SMF und MME-Registrierungsinformationen der sechsten SMF auf einer UDM-Seite vorhanden sind und AMF-Registrierungsinformationen der sechsten SMF und ein Zugriffspunktname (an access point name, APN) entsprechend einem Sitzungs-DNN der sechsten SMF nicht auf der UDM-Seite vorhanden sind;
eine siebte Abonnementaufzeichnung, wobei die siebte Abonnementaufzeichnung durch eine AMF initiiert wird, und Partnerschaftsprojekt-Registrierungsinformationen der 3. Generation (3rd generation partnership project, 3GPP) der AMF oder Partnerschaftsprojekt-Registrierungsinformationen nicht 3. Generation (non-3rd generation partnership project, NON-3GPP) der AMF nicht auf der UDM-Seite vorhanden sind;
eine achte Abonnementaufzeichnung, wobei die achte Abonnementaufzeichnung durch die SMSF initiiert wird und 3GPP-Registrierungsinformationen oder Nicht-3GPP-Registrierungsinformationen der SMSF nicht auf der UDM-Seite vorhanden sind; und
eine neunte Abonnementaufzeichnung, wobei die neunte Abonnementaufzeichnung eine Abonnementaufzeichnung ist, die ein Ablaufdatum der neunten Abonnementaufzeichnung überschreitet.

6. Verfahren nach Anspruch 4, wobei vor dem vorläufigen Überprüfen der Abonnementaufzeichnungen in dem UDR das Verfahren ferner Folgendes umfasst:
Bestimmen, dass eine Anzahl von Abonnementaufzeichnungen eines Benutzers in dem UDR einen vorbestimmten Schwellenwert erreicht;
wobei das vorläufige Überprüfen der Abonnementaufzeichnungen in dem UDR Folgendes umfasst:
Detektieren der Abonnementaufzeichnungen des Benutzers in dem UDR.

7. Verfahren zum Identifizieren von Abonnementaufzeichnungen, das auf einer Abonnementinitiierungs-Netzwerkfunktion, NF, ausgeführt wird, umfassend:
Empfangen einer redundanten Aufzeichnungsidentifizierungsanforderung, die durch eine einheitliche Datenverwaltungsentität, UDM, gesendet wird;
Bestimmen einer Zielabonnementaufzeichnung, die eine redundante Identifizierung gemäß der redundanten Aufzeichnungsidentifizierungsanforderung erfordert;
Bestimmen, ob die Zielabonnementaufzeichnung eine redundante Abonnementaufzeichnung ist, um ein redundantes Aufzeichnungsidentifizierungsergebnis zu erlangen; und
Senden des redundanten Aufzeichnungsidentifizierungsergebnisses an die UDM-Entität,
wobei die redundante Abonnementaufzeichnung eine ungültige Abonnementaufzeichnung ist und die NF Folgendes umfasst: eine Zugriffs- und Mobilitätsverwaltungsfunktion, AMF, eine erste Sitzungsverwaltungsfunktion, SMF und eine Kurznachrichtendienstfunktion, SMSF.

8. Verfahren nach Anspruch 7, wobei die redundante Aufzeichnungsidentifizierungsanforderung Aufzeichnungsangabeninformationen umfasst und die Aufzeichnungsangabeinformationen eine Abonnementkennung einer Abonnementaufzeichnung sind;
wobei das Bestimmen der Zielabonnementaufzeichnung, die die redundante Identifizierung gemäß der redundanten Aufzeichnungsidentifizierungsanforderung erfordert, Folgendes umfasst:
Konfigurieren von allen Abonnementaufzeichnungen eines Benutzers, denen die Abonnementkennung entspricht, als Zielabonnementaufzeichnung.

9. Netzwerkvorrichtung, umfassend einen Prozessor (71), einen Speicher (72) und einen Kommunikationsbus (73), wobei,
der Kommunikationsbus (73) dazu konfiguriert ist, eine verbindende Kommunikation zwischen dem Prozessor (71) und dem Speicher (72) zu ermöglichen; und
der Prozessor (71) dazu konfiguriert ist, mindestens ein in dem Speicher (72) gespeichertes Programm auszuführen, um das Verfahren zur Verwaltung von Abonnementaufzeichnungen nach einem der Ansprüche 1 bis 6 zu implementieren; oder der Prozessor dazu konfiguriert ist, mindestens ein in dem Speicher (72) gespeichertes Programm auszuführen, um das Verfahren zur Identifizierung von Abonnementaufzeichnungen nach Anspruch 7 oder 8 zu implementieren.

10. System zur Verwaltung von Abonnementaufzeichnungen, umfassend eine einheitliche Datenverwaltungsentität, UDM (81), einen einheitlichen Datenspeicher, UDR (82) und mindestens eine Abonnementinitiierungs-Netzwerkfunktion, NF (83), wobei die UDM-Entität (81) in Kommunikationsverbindung mit dem UDR (82) und jeder Abonnementinitialisierungs-NF (83) der mindestens einen Abonnementinitialisierungs-NF (83) steht; die UDM-Entität (81) eine Netzwerkvorrichtung ist, in der der Prozessor von Anspruch 9 ein Programm ausführt, um das Verfahren zur Verwaltung von Abonnementaufzeichnungen nach einem der Ansprüche 1 bis 6 zu implementieren, und die Abonnementsinitiierungs-NF eine Netzwerkvorrichtung ist, in der der Prozessor nach Anspruch 9 das Programm ausführt, um das Verfahren zur Identifizierung von Abonnementaufzeichnungen nach Anspruch 7 oder 8 zu implementieren.

11. Speichermedium, das mindestens eines von einem Verwaltungsprogramm für Abonnementaufzeichnungen oder einem Abonnementaufzeichnungs-Identifizierungsprogramm speichert, wobei das Verwaltungsprogramm für Abonnementaufzeichnungen durch mindestens einen Prozessor ausführbar ist, um das Verfahren zur Verwaltung von Abonnementaufzeichnungen nach einem der Ansprüche 1 bis 6 zu implementieren; und das Abonnementaufzeichnungs-Identifizierungsprogramm durch den mindestens einen Prozessor ausführbar ist, um das Verfahren zur Identifizierung von Abonnementaufzeichnungen nach Anspruch 7 oder 8 zu implementieren.

## Revendications

1. Procédé de gestion d'enregistrement d'abonnement, exécuté dans une entité de gestion unifiée de données, UDM, comprenant :
l'envoi (S102) d'une demande d'identification d'enregistrement redondant à une fonction de réseau d'initiation d'abonnement, NF, dans lequel la demande d'identification d'enregistrement redondant est configurée pour demander à la NF d'initiation d'abonnement d'identifier si un enregistrement d'abonnement cible dans un référentiel de données unifié, UDR, est un enregistrement d'abonnement redondant, et l'enregistrement d'abonnement redondant est un enregistrement d'abonnement non valide ;
la réception d'un résultat d'identification d'enregistrement redondant envoyé par la NF d'initiation d'abonnement en fonction de la demande d'identification d'enregistrement redondant, dans lequel le résultat d'identification d'enregistrement redondant est utilisé pour indiquer si l'enregistrement d'abonnement cible est l'enregistrement d'abonnement redondant ; et
la suppression de l'enregistrement d'abonnement redondant dans un cas où le résultat d'identification d'enregistrement redondant indique que l'enregistrement d'abonnement cible est l'enregistrement d'abonnement redondant ;
dans lequel la NF comprend : une fonction de gestion d'accès et de mobilité, AMF, une première fonction de gestion de session, SMF, et une fonction de service de messages courts, SMSF.

2. Procédé selon la revendication 1, dans lequel la demande d'identification d'enregistrement redondant comprend des informations d'indication d'enregistrement, et les informations d'indication d'enregistrement sont utilisées pour indiquer un enregistrement d'abonnement cible qui nécessite que la NF d'initiation d'abonnement effectue une identification redondante.

3. Procédé selon la revendication 2, dans lequel les informations d'indication d'enregistrement comprennent l'un : d'un identifiant d'abonnement d'un enregistrement d'abonnement, ou d'un identifiant d'utilisateur d'un utilisateur auquel appartient un enregistrement d'abonnement, dans lequel l'identifiant d'utilisateur est utilisé pour ordonner à la NF d'initiation d'abonnement d'utiliser l'enregistrement d'abonnement appartenant à l'utilisateur comme enregistrement d'abonnement cible.

4. Procédé selon l'une quelconque des revendications 1 à 3, dans lequel, avant l'envoi de la demande d'identification d'enregistrement redondant à la NF d'initiation d'abonnement, le procédé comprend également :
le filtrage préliminaire d'enregistrements d'abonnement dans l'UDR pour obtenir un enregistrement d'abonnement suspecté d'être redondant ; et
la configuration de l'enregistrement d'abonnement suspecté d'être redondant comme enregistrement d'abonnement cible.

5. Procédé selon la revendication 4, dans lequel l'enregistrement d'abonnement suspecté d'être redondant comprend au moins l'un des enregistrements suivants :
un premier enregistrement d'abonnement, dans lequel le premier enregistrement d'abonnement est initié par une première SMF et les informations d'enregistrement de la première SMF n'existent pas du côté UDM ;
un deuxième enregistrement d'abonnement, dans lequel le deuxième enregistrement d'abonnement est initié par une première information d'assistance à la sélection de tranche de réseau unique, S-NSSAI, sous une deuxième SMF, et les informations d'enregistrement d'une SMF correspondant à la première S-NSSAI n'existent pas du côté UDM ;
un troisième enregistrement d'abonnement, dans lequel le troisième enregistrement d'abonnement est initié par un premier nom de réseau de données, DNN, sous une troisième SMF, et les informations d'enregistrement d'une SMF correspondant au premier DNN n'existent pas du côté UDM ;
un quatrième enregistrement d'abonnement, dans lequel le quatrième enregistrement d'abonnement est initié par un second DNN correspondant à une seconde S-NSSAI sous une quatrième SMF, et les informations d'enregistrement d'une SMF correspondant à la seconde S-NSSAI ou au second DNN n'existent pas du côté UDM ;
un cinquième enregistrement d'abonnement, dans lequel le cinquième enregistrement d'abonnement est initié par une cinquième SMF, et les informations d'enregistrement AMF valides pour la cinquième SMF n'existent pas du côté UDM, et les informations d'enregistrement d'entité de gestion de mobilité, MME, valides pour la cinquième SMF n'existent pas du côté UDM ;
un sixième enregistrement d'abonnement, dans lequel le sixième enregistrement d'abonnement est initié par une sixième SMF, les informations d'enregistrement de la sixième SMF et les informations d'enregistrement MME de la sixième SMF existent du côté UDM, et les informations d'enregistrement AMF de la sixième SMF et un nom de point d'accès, APN, correspondant à un DNN de session de la sixième SMF n'existent pas du côté UDM ;
un septième enregistrement d'abonnement, dans lequel le septième enregistrement d'abonnement est initié par une AMF, et les informations d'enregistrement du projet de partenariat de 3e génération, 3GPP, de l'AMF ou les informations d'enregistrement du projet de partenariat non de 3e génération, NON-3GPP, de l'AMF n'existent pas du côté UDM ;
un huitième enregistrement d'abonnement, dans lequel le huitième enregistrement d'abonnement est initié par la SMSF, et les informations d'enregistrement 3GPP ou les informations d'enregistrement non 3GPP de la SMSF n'existent pas du côté UDM ; et
un neuvième enregistrement d'abonnement, dans lequel le neuvième enregistrement d'abonnement est un enregistrement d'abonnement dépassant une date d'expiration du neuvième enregistrement d'abonnement.

6. Procédé selon la revendication 4, dans lequel, avant le filtrage préliminaire des enregistrements d'abonnement dans l'UDR, le procédé comprend également :
la détermination qu'un nombre d'enregistrements d'abonnement d'un utilisateur dans l'UDR atteint un seuil prédéfini ;
dans lequel le filtrage préliminaire des enregistrements d'abonnement dans l'UDR comprend :
la détection des enregistrements d'abonnement de l'utilisateur dans l'UDR.

7. Procédé d'identification d'enregistrement d'abonnement, exécuté au niveau d'une fonction de réseau d'initiation d'abonnement, NF, comprenant :
la réception d'une demande d'identification d'enregistrement redondant envoyée par une entité de gestion unifiée de données, UDM ;
la détermination d'un enregistrement d'abonnement cible nécessitant une identification redondante en fonction de la demande d'identification d'enregistrement redondant ;
le fait de déterminer si l'enregistrement d'abonnement cible est un enregistrement d'abonnement redondant, pour obtenir un résultat d'identification d'enregistrement redondant ; et
l'envoi du résultat d'identification de l'enregistrement redondant à l'entité UDM
dans lequel l'enregistrement d'abonnement redondant est un enregistrement d'abonnement non valide, et la NF comprend : une fonction de gestion d'accès et de mobilité, AMF, une première fonction de gestion de session, SMF, et une fonction de service de messages courts, SMSF.

8. Procédé selon la revendication 7, dans lequel la demande d'identification d'enregistrement redondant comprend des informations d'indication d'enregistrement, et les informations d'indication d'enregistrement sont un identifiant d'abonnement d'un enregistrement d'abonnement ;
dans lequel la détermination de l'enregistrement d'abonnement cible nécessitant l'identification redondante en fonction de la demande d'identification d'enregistrement redondant comprend :
la configuration de tous les enregistrements d'abonnement d'un utilisateur auquel l'identifiant d'abonnement correspond comme enregistrement d'abonnement cible.

9. Dispositif de réseau, comprenant un processeur (71), une mémoire (72) et un bus de communication (73), dans lequel,
le bus de communication (73) est configuré pour permettre une communication connective entre le processeur (71) et la mémoire (72) ; et
le processeur (71) est configuré pour exécuter au moins un programme stocké dans la mémoire (72) pour mettre en œuvre le procédé de gestion d'enregistrement d'abonnement selon l'une quelconque des revendications 1 à 6 ; ou le processeur est configuré pour exécuter au moins un programme stocké dans la mémoire (72) pour mettre en œuvre le procédé d'identification d'enregistrement d'abonnement selon la revendication 7 ou 8.

10. Système de gestion d'enregistrement d'abonnement, comprenant une entité de gestion unifiée de données, UDM, (81), un stockage de données unifié, UDR (82), et au moins une fonction de réseau d'initiation d'abonnement, NF (83), dans lequel l'entité UDM (81) est en connexion de communication avec l'UDR (82) et chaque NF d'initiation d'abonnement (83) de l'au moins une NF d'initiation d'abonnement (83) ; l'entité UDM (81) est un dispositif de réseau dans lequel le processeur selon la revendication 9 exécute un programme pour mettre en œuvre le procédé de gestion d'enregistrement d'abonnement selon l'une quelconque des revendications 1 à 6, et la NF d'initiation d'abonnement est un dispositif de réseau dans lequel le processeur selon la revendication 9 exécute le programme pour mettre en œuvre le procédé d'identification d'enregistrement d'abonnement selon la revendication 7 ou 8.

11. Support de stockage, stockant au moins un programme de gestion d'enregistrement d'abonnement ou un programme d'identification d'enregistrement d'abonnement, dans lequel le programme de gestion d'enregistrement d'abonnement est exécutable par au moins un processeur pour mettre en œuvre le procédé de gestion d'enregistrement d'abonnement selon l'une quelconque des revendications 1 à 6 ; et le programme d'identification d'enregistrement d'abonnement est exécutable par l'au moins un processeur pour mettre en œuvre le procédé d'identification d'enregistrement d'abonnement selon la revendication 7 ou 8.
